# EUROPÄISCHE PATENTSCHRIFT

(11) **EP 1 686 282 B1**
(45) Veröffentlichungstag und Bekanntmachung des Hinweises auf die Patenterteilung: **22.06.2016**
(21) Anmeldenummer: 06001274.7
(22) Anmeldetag: 21.01.2006
(51) Int. Cl.: F16F 1/38, F16F 1/40

(54) **Buchsenlager mit in Umfangsrichtung wechselnder radialer Steifigkeit**
Bush with variable radial stiffness in the circumferential direction
Manchon à rigidité radiale variable en direction circonférentielle

(30) Priorität: 27.01.2005 DE 102005003945
(43) Veröffentlichungstag der Anmeldung: 02.08.2006
(73) Patentinhaber: BOGE Elastmetall GmbH, 49401 Damme (DE)
(72) Erfinder: Heuer, Karl, 49638 Nortrup (DE); Palluck, Karl-Walter, 49084 Osnabrück (DE); Schnaars, Wolfgang, 49084 Osnabrück (DE); Vossel, Andreas, 49086 Osnabrück (DE)
(74) Vertreter: Bossmeyer, Jörg Peter

(56) Entgegenhaltungen:
- EP-A- 0 226 702
- EP-A- 0 334 081
- EP-A- 1 008 781
- DE-A1- 3 536 284

## Beschreibung

Die Erfindung betrifft ein Buchsenlager, vorzugsweise ein Gummi-Metall-Lager, in Buchsenform, welches in der Umfangsrichtung unterschiedliche beziehungsweise wechselnde radiale Steifigkeiten aufweist. Zur Erreichung der unterschiedlichen radialen Steifigkeiten beziehungsweise Kennungen weist das Lager in einer ersten radialen Hauptbelastungsrichtung mindestens einen Radialsteg mit hoher Steifigkeit auf, der durch eine Schichtenfolge elastomerer und metallischer oder/und aus Kunststoff bestehender Elemente gebildet ist, während in einer zweiten, vorzugsweise zur ersten im rechten Winkel angeordneten radialen Richtung mindestens eine Niere ausgebildet ist, welche eine in diesem Bereich niedrigere radiale Steifigkeit des Lagers bewirkt.

Entsprechend ihrem umfangreichen Einsatz in vielfältigen Anwendungsgebieten, werden an Buchsenlager sehr unterschiedliche Anforderungen gestellt. Besonders ausgeprägt ist diese Differenzierung der folglich hinsichtlich ihres Aufbaus sehr unterschiedlich gestalteten Lager insbesondere bei deren Einsatz in der Fahrzeugindustrie. Unter anderem werden hier, im Bereich der Lagerung von Komponenten des Fahrgestells, Buchsenlager benötigt, welche bezogen auf ihren Umfang unterschiedliche radiale Steifigkeiten beziehungsweise Kennungen aufweisen. Dabei werden in diesem Bereich unter anderem Lager verbaut, die ein großes Kennungsverhältnis im Hinblick auf ihre unterschiedlichen radialen Steifigkeiten besitzen, das heißt Bereiche mit hoher radialer Steifigkeit und solche mit einer dem gegenüber deutlich geringeren radialen Steifigkeit aufweisen. Es ist bekannt, derartige Lager mittels einer Lagergeometrie zu realisieren, bei welcher in mindestens einer radialen Richtung ein Radialsteg mit hoher Steifigkeit und, vorzugsweise rechtwinklig dazu, mindestens eine Niere, mit einem in diesem Bereich in seiner Mächtigkeit reduzierten elastomeren Lagerkörper ausgebildet ist.

Ein Lager mit einem derartigen Aufbau ist beispielsweise aus der DE 35 36 284 A1 bekannt. Durch einen schichtweisen Aufbau des Radialstegs mit einer sich abwechselnden Schichtfolge aus Elastomer und Einlegeelementen aus Blech wird für dieses Lager im Bereich des Radialstegs eine hohe Steifigkeit erreicht, so dass sich ein vergleichsweise hohes Verhältnis der Kennungen im Bereich des Stegs und der rechtwinklig dazu angeordneten Niere ergibt. Bei dem in der Schrift dargestellten Lager ist der Lagerkörper mit einem metallischen Innenteil durch Vulkanisation haftend verbunden. Hierdurch weist das in der Druckschrift beschriebene Lager jedoch eine für manche Einsatzfälle unerwünscht harte Torsion auf. Zudem gibt es Einsatzfälle, für welche ein noch höheres Kennungsverhältnis zwischen den Umfangsbereichen Radialsteg und Niere wünschenswert ist.

Zur Verringerung der Torsion bei Buchsenlagern ist es bekannt, diese mit einem zusätzlichen, torsionsweichen Innenlager oder mit einem Zwischenrohr auszubilden, was jedoch zu vergleichsweise komplizierten Lagergeometrien und damit zu einem erhöhten Fertigungsaufwand führt.

Des Weiteren offenbart die EP 0 226 702 A1 ein Buchsenlager mit in Umfangsrichtung wechselnder radialer Steifigkeit mit einer Innenhülse und einem diesem umgebenden elastomeren Lagerkörper (4) mit wenigstem einem Radialsteg hoher radialer Steifigkeit und einer Niere. In die Innenhülse ist ein Lagerkern eingesetzt, wobei zwischen dem Lagerkern und der Innenhülse eine an der Innenfläche der Innenhülse anvulkanisierte eine Elastomerkontur angeordnet ist. Die Elastomerkontur ist gegenüber dem Lagerkern auf seiner Außenfläche mit Ausnehmungen zur Aufnahme von Schmiermittel versehen. Die Aufnahme des Schmiermittels erfordert dabei einen nachteiligen zusätzlichen Aufwand bei der Gestaltung und Montage des Buchsenlagers.

Aufgabe der Erfindung ist es daher, ein Buchsenlager mit mindestens einem Radialsteg und einer Niere so auszubilden, dass dieses, bei einem einfachen Aufbau, bezogen auf die Bereiche Radialsteg und Niere, ein besonders hohes Kennungsverhältnis und dabei gleichzeitig ein weiches Torsionsverhalten aufweist.

Diese Aufgabe wird durch ein Buchsenlager mit den Merkmalen des Hauptanspruchs gelöst. Vorteilhafte Aus- beziehungsweise Weiterbildungen des erfindungsgemäßen Lagers sind durch die Unteransprüche gegeben.

Das vorgeschlagene Buchsenlager mit einer in der Umfangsrichtung wechselnden radialen Steifigkeit besteht aus einem Innenteil und einem das Innenteil zumindest abschnittsweise umgebenden und zur Aufnahme durch eine Außenhülse oder ein Aufnahmeauge ausgebildeten elastomeren Lagerkörper. Durch den elastomeren Lagerkörper sind wenigstens ein Radialsteg mit einer hohen radialen Steifigkeit und eine Niere mit einer, gegenüber dem Radialsteg, niedrigen radialen Steifigkeit ausgebildet. Der Radialsteg ist aus einer in der radialen Richtung geschichteten Folge elastomerer und metallischer oder/und aus Kunststoff bestehender Elemente gebildet. Zur Ausbildung der Niere ist ein am Innenteil angeordnetes elastomeres Anschlagelement vorgesehen, welches gegenüber der Außenhülse oder dem Aufnahmeauge, von welcher oder von welchem das Lager aufgenommen wird, beabstandet ist, so dass der Lagerkörper hier eine geringere Breite beziehungsweise einen geringeren Durchmesser besitzt, als im Bereich des Radialstegs. In dem letztgenannten Bereich weist das Lager eine hohe Steifigkeit auf, während im Vergleich dazu die radiale Steifigkeit im Bereich der Niere deutlich geringer ist. Das im Vergleich mit bisher bekannten Lösungen des Standes der Technik mögliche höhere Kennungsverhältnis zwischen den Bereichen hoher und niedriger Steifigkeit wird insbesondere durch eine hohe radiale Steifigkeit im Bereich des Radialstegs erreicht. Dabei ist durch eine spezielle Ausbildung des Innenteils des erfindungsgemäßen Lagers in der Richtung des Radialstegs eine gegenüber den bisher bekannten Lösungen deutlich höhere Steifigkeit möglich, wobei in vorteilhafter Weise gleichzeitig eine geringe Rückstellkraft bei Torsion, also ein weiches Torsionsverhalten, erreicht wird. Erfindungsgemäß ist dazu bei dem vorgeschlagenen Lager das Innenteil zweiteilig ausgebildet. Es besteht aus einer metallischen Innenhülse und einem von dieser aufgenommenen, vorzugsweise ebenfalls metallischen Lagerkern. An die Innenfläche der Innenhülse oder an die Außenfläche des Lagerkerns ist eine Elastomer- beziehungsweise Gummikontur anvulkanisiert. Der Innenkern, welcher je nach Einsatzzweck des Lagers als ein rohrförmiges, also hohles, oder als ein weitgehend massives Element ausgebildet sein kann, ist dabei nicht haftend in die Innenhülse des Innenteils eingefügt, also nicht haftend mit ihr verbunden. Er ist vielmehr in die Innenhülse eingepresst.

Im Hinblick darauf, dass die Elastomer- beziehungsweise Gummikontur, wie bereits erwähnt, entweder an die Innenfläche der Innenhülse oder aber an die Außenfläche des von dieser aufgenommenen Lagerkerns anvulkanisiert ist, sind somit zwei im Wesentlichen gleich wirkende Grundvarianten des erfindungsgemäßen Lagers gegeben, für welche die Darstellungen zu dem gegenüber dem Innendurchmesser der Innenhülse bestehenden Übermaß des Lagerkerns wie folgt zu verstehen sind. Bei der ersten, bevorzugten Variante, bei welcher die Elastomerkontur an die Innenfläche der Innenhülse anvulkanisiert ist, wird der Innendurchmesser der Innenhülse durch den Durchmesser im Bereich der dann der Innenhülse zuzurechnenden Elastomerkontur bestimmt, gegenüber welcher der, in diesem Falle auf seiner Außenfläche nicht mit einer Elastomerkontur versehene Lagerkern ein entsprechendes Übermaß aufweist. Hingegen wird bei der zweiten Variante, mit einer an die Außenfläche des Lagerkerns anvulkanisierten Elastomerkontur, das Außenmaß des Lagerkerns durch das im Bereich der Elastomerkontur gegebene Maß bestimmt, gegenüber welchem der Innendurchmesser der, in diesem Fall nicht mit einem Elastomer auf ihrer Innenfläche versehenen Innenhülse geringer ist. In beiden Fällen wird jedoch der Lagerkern in die Innenhülse eingepresst, mit dieser aber nicht haftend verbunden. Hieraus resultiert zum einen das weiche Torsionsverhalten und zum anderen wird in den im Inneren der Innenhülse oder an der Außenfläche des Lagerkerns anvulkanisierten Elastomerbereichen durch das Einpressen des Lagerkerns in die Innenhülse eine Vorspannung aufgebaut, welche eine erhöhte radiale Steifigkeit des Lagers bewirkt, wobei diese höhere radiale Steifigkeit sich an dem Radialsteg unmittelbar auswirkt, im Bereich der Niere aber erst nach einem längeren linear verlaufenden Kennlinienbereich progressiv einsetzt.

Durch die erfindungsgemäße Ausbildung des Lagers konnten im Hinblick auf das Verhältnis der radialen Steifigkeit im Bereich des Radialstegs und der Niere Verhältnisse von bis zu 12.000 N/mm : 130 N/mm erzielt werden.

Der Lagerkern, welcher, abgesehen von der daran gegebenenfalls anvulkanisierten Elastomerkontur, aus Metall oder Kunststoff besteht, weist vorzugsweise eine nach außen im Wesentlichen zylindrische Form auf, wobei er, wie bereits dargestellt, als hohlzylindrisches oder weitgehend massives Element ausgebildet sein kann.

Gemäß einer besonderen Ausbildungsform des Lagers ist der Durchmesser des den Lagerkern bildenden zylinderförmigen Elements aus Metall oder Kunststoff im Bereich der Elastomerkontur verringert, wobei diese Durchmesserreduzierung im Falle dessen, dass die Elastomerkontur an die Außenfläche des Lagerkerns anvulkanisiert ist, nur die nicht elastomeren Bereiche betrifft beziehungsweise die vorstehende Aussage sich auf den Durchmesser des Lagerkerns unter Außerbetrachtlassung der Elastomerkontur bezieht. Somit ist, unabhängig davon, ob die Elastomerkontur an die Innenfläche der Innenhülse oder die Außenfläche des Lagerkerns anvulkanisiert ist, beiderseits der Elastomerkontur eine axiale Schulter ausgebildet. Hierdurch wird eine weitere Reduzierung der Torsionssteifigkeit erreicht.

Die Innenhülse des Innenteils kann eine von der Zylinderform abweichende Außenkontur, gegebenenfalls eine nahezu quaderförmige Außenkontur aufweisen. Im Hinblick auf einen guten Sitz des Innenteils in dem elastomeren Lagerkörper sind, bei einer ebenfalls vorteilhaften Ausbildungsform des erfindungsgemäßen Lagers, Einkerbungen auf der Außenfläche der Innenhülse, also im Bereich der Kontaktflächen zwischen dem Innenteil und den elastomeren Lagerkörper, ausgebildet.

Entsprechend einer besonders vorteilhaften Weiterbildung des vorgeschlagenen Lagers ist die im Bereich der Niere am Innenteil angeordnete elastomere Anschlagfläche, bezogen auf die Lagerlängsachse, beidseitig einer diese Achse schneidenden Ebene keilförmig ausgebildet, wobei sich hierdurch der Abstand der Anschlagelemente gegenüber der Innenfläche der Lageraufnahme (Außenhülse oder Aufnahmeauge am Einbauort) in Richtung der axialen Lagerenden vergrößert. Zum einen bewirken die Keilflächen, dass in das Lager eindringende Verunreinigungen aus der Außenhülse beziehungsweise dem Aufnahmeauge herausgedrückt werden. Andererseits wird hierdurch in vorteilhafter Weise ein progressiver Anlauf der Lagerkennlinie hinsichtlich der radialen Steifigkeit im Bereich der Niere erreicht. Das Lager weist dabei in seiner Kennlinie im Bereich der Niere einen großen linearen Bereich auf, an den sich ein progressiv steigender Kennlinienast anschließt.

Bei einer weiteren möglichen Ausbildungsform des Lagers ist der äußere Bereich der den Radialsteg ausbildenden Schichtenfolge in einen Ring beziehungsweise in zylindrisches Außenteil integriert, welcher beziehungsweise welches mit dem Radialsteg durch Anvulkanisieren verbunden ist.

Gemäß einer praxisrelevanten Ausführungsform des Lagers kann im Bereich eines oder beider axialen Lagerenden eine Scheibe vorgesehen sein, durch welche die Flächenpressung bei der Befestigung des Lagers reduziert wird. Ähnliches lässt sich, vorteilhafter Weise unter Wegfall eines zusätzlichen Teils, durch die Ausbildung eines Flansches an einem der axialen Enden des Lagerkerns erreichen. Hierbei sind der Lagerkern und der entsprechende als Kaltfließpressteil oder Sinterteil ausgebildet.

Die Erfindung soll nachfolgend anhand eines Ausführungsbeispiels nochmals näher erläutert werden. In den zugehörigen Zeichnungen zeigen:
- Fig. 1:: Eine Ausbildungsform des erfindungsgemäßen Lagers in einem durch den Radialsteg geführten Längsschnitt
- Fig. 2:: Das Lager nach Fig. 1 in einer radial geschnittenen Darstellung
- Fig. 3:: Das Lager gemäß den Fig. 1 und 2 in einer räumlichen Darstellung
- Fig. 4:: Das Lager nach Fig. 1 nach der Montage in einem Aufnahmeauge
- Fig. 5:: Das Lager gemäß Fig. 2 nach der Montage in das Aufnahmeauge
- Fig. 6:: Eine Hälfte des Lagerkerns einer modifizierten Ausbildungsform in einem Axialschnitt

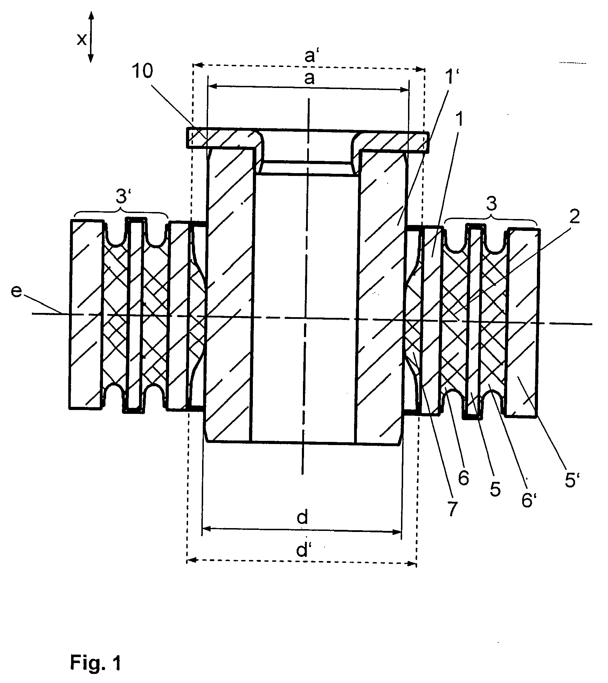

Die Fig. 1 zeigt beispielhaft eine Ausführungsform des erfindungsgemäßen Lagers in einer Darstellung mit einem entlang der Lagerachse x durch den Radialsteg verlaufenden Schnitt.

Das Lager besteht in grundsätzlich bekannter Weise aus einem Innenteil 1, 1' und einem dieses zumindest abschnittsweise umgebenden elastomeren Lagerkörper 2. Im Bereich der in der Zeichnung erkennbaren Radialstege 3 (aufgrund der Durchgängigkeit könnte man auch von einem Radialsteg sprechen) ist der Lagerkörper 2 durch eine Schichtenfolge gebildet, bei welcher in radialer Richtung elastomere Bereiche 6, 6' und metallische oder/und aus Kunststoff gebildete Elemente 5, 5' einander abwechseln. Die äußere Schicht wird durch Metallelemente 5' oder Elemente aus Kunststoff, vorzugsweise jedoch durch Metallelemente 5', gebildet, welche eine kreissegmentförmige Außenkontur besitzen und bei der Montage des Lagers in ein Aufnahmeauge 9 oder eine Hülse als Halteelement beziehungsweise Halteblech wirken. Diese Segmente können auch in einen äußeren Ring integriert sein, was die Montage unter Umständen vereinfacht.

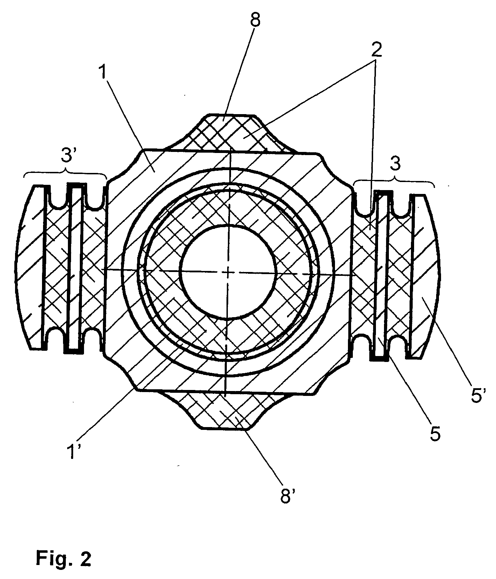

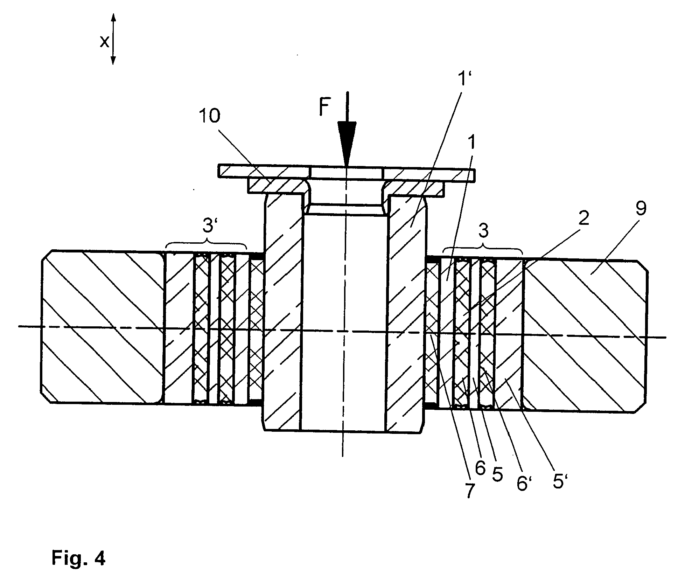

In der Zeichnung gut erkennbar ist die spezielle Gestaltung des Innenteils 1, 1'. Dieses besteht aus einer Innenhülse 1, an deren Innenfläche eine Gummikontur 7 anvulkanisiert wurde und durch welche ein ebenfalls hülsenförmiger, mit der Innenhülse 1 nicht verbundener, beziehungsweise nicht an ihr haftender Lagerkern 1' aufgenommen wird. Der im Beispiel hohlzylindrische Lagerkern 1' ist gegenüber dem von der Gummikontur 7 an der Innenfläche bestimmten Innendurchmesser d der Innenhülse 1 mit einem Übermaß a ausgebildet und in die Innenhülse 1 eingepresst worden. Aus dieser speziellen Ausbildung (- im Falle einer Ausbildungsform mit einer an die Außenfläche des Lagerkerns 1' anvulkanisierten Elastomerkontur 7 wäre der Innendurchmesser der Innenhülse 1 durch d' und das Übermaß durch a', nämlich das Übermaß der Elastomerkontur 7 gegenüber dem Innendurchmesser d' der Innenhülse 1 gegeben -) resultiert insbesondere das weiche Torsionsverhalten des Lagers. Andererseits wird durch das Einpressen des Lagerkerns 1' in die Innenhülse 1 in der in ihrem Inneren anvulkanisierten Gummikontur 7 eine Vorspannung erzeugt, welche eine hohe radiale Steifigkeit bewirkt. Im Bereich der Radialstege 3, 3' begünstigt dies die grundsätzliche radiale Steifigkeit des Lagers in diesem Bereich. Im Bereich der Niere 4, 4', welche insbesondere in den Fig. 2 und 4 gut erkennbar ist, bewirkt diese Ausbildung, dass das Lager zunächst über einen großen Bereich ein lineares Kennungsverhalten aufweist, welches dann, beim Anschlag an die Anschlagflächen, unterstützt durch die unter Vorspannung stehende Gummikontur 7 im Inneren der Innenhülse 1, progressiv auf hohe Werte ansteigt.

In der Fig. 2 ist die zuvor erläuterte Ausführungsform des Lagers nochmals mit einem radial durch das Lager geführten Schnitt gezeigt. Gut erkennbar sind hier die Radialstege 3, 3' und die elastomeren Anschlagelemente 8, 8', in deren Bereich nach dem Montieren des Lagers in ein Aufnahmeauge 9 die Nieren 4, 4' ausgebildet sind. Die Anschlagelemente 8, 8' weisen eine Außenfläche mit einem beidseits der Ebene e keilförmigen Verlauf auf. Bei dem im Beispiel gezeigten Lager weicht die äußere Form der Innenhülse 1 von der Zylinderform ab. Denkbar ist jedoch auch eine hohlzylindrische Ausbildung.

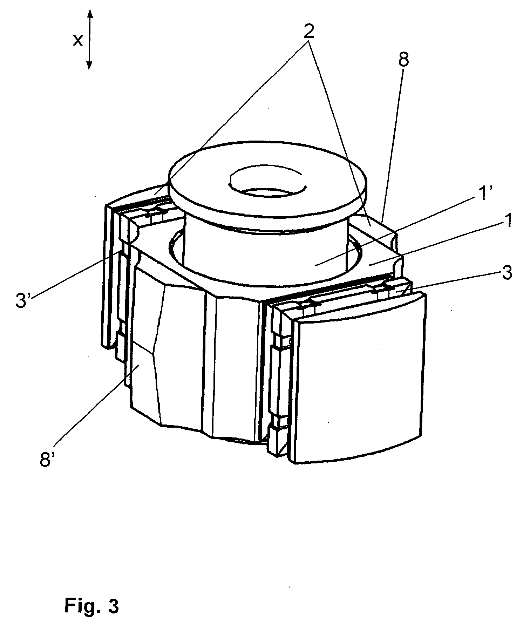

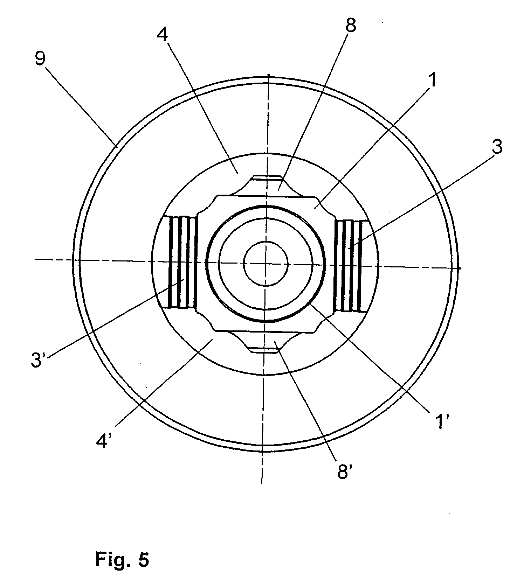

Die Fig. 3 zeigt das zuvor erläuterte Lager nochmals in einer räumlichen Darstellung, welche einen besonders guten Eindruck von der Lagergeometrie vermittelt. Weiterhin ist das erfindungsgemäße Lager in den Fig. 4 und 5 nochmals nach der Montage in ein Aufnahmeauge 9, beispielsweise im Bereich eines Fahrzeuglenkers, gezeigt. Durch die im Bereich des einen axialen Lagerendes vorgesehene Scheibe 10 wird das Eindringen von Schmutz in das Lager erschwert und die in axialer Richtung wirkende Flächenpressung des Lagers beim Einbau reduziert.

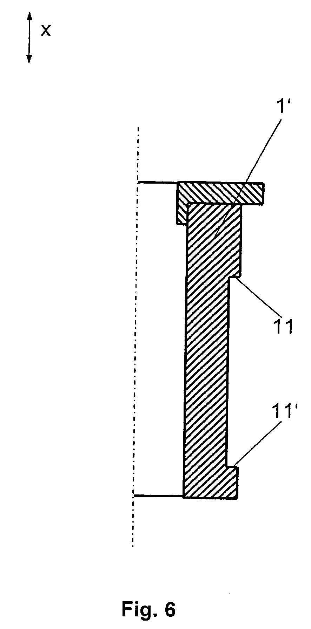

Die Fig. 6 zeigt eine Hälfte des Lagerkerns 1' entsprechend einer modifizierten Ausbildungsform des Lagers in einem Axialschnitt. Bei dieser Ausbildungsform ist der Durchmesser des im Wesentlichen zylinderförmigen Elements in dem Bereich, in welchem es mit seiner Außenfläche nach dem Einpressen in die Innenhülse 1 an der Elastomerkontur 7 anliegt, reduziert. Hierdurch sind zwei Schultern 11, 11` gebildet, welche ein Entweichen beziehungsweise Ausweichen oder Verdrücken des Gummis beim Einpressen des Lagerkerns 1' ind die Innenhülse 1 verhindern. Zudem wird durch diese Ausbildungsform eine noch weichere Torsion erreicht.

### Bezugszeichenliste

- 1, 1': Innenteil
- 1: Innenhülse
- 1': Lagerkern
- 2: elastomerer Lagerkörper
- 3, 3': Radialsteg
- 4, 4': Niere
- 5, 5': Elemente aus Kunststoff oder Metall
- 6, 6': elastomere Bereiche
- 7: Elastomer- bzw. Gummikontur
- 8, 8': Anschlagelement
- 9: Außenhülse oder Aufnahmeauge
- 10: Scheibe
- 11, 11': Schulter

- d, d': Innendurchmesser
- a, a': Übermaß
- x: Längsachse
- e: Ebene quer zur Längsachse

## Patentansprüche

1. Buchsenlager, mit in Umfangsrichtung wechselnder radialer Steifigkeit, bestehend aus einem Innenteil (1, 1') und einem das Innenteil (1, 1') zumindest abschnittsweise umgebenden, zur Aufnahme durch eine Außenhülse oder ein Aufnahmeauge (9) ausgebildeten elastomeren Lagerkörper (2), mit wenigstens einem Radialsteg (3, 3') hoher radialer Steifigkeit und einer Niere (4, 4'), die durch ein am Innenteil angeordnetes und gegenüber der Außenhülse oder dem Aufnahmeauge (9) beabstandetes elastomeres Anschlagelement (8) ausgebildet ist, wobei im Bereich der Niere (4, 4') die radiale Steifigkeit niedriger ist als im Bereich des Radialstegs (3, 3'), wobei im Bereich des Radialstegs (3, 3') unter Ausbildung einer radialen Schichtenfolge mit dem Elastomer (6, 6'), Elemente (5, 5') aus Metall oder Kunststoff in den Lagerkörper (2) eingefügt und an dessen radialen Außenflächen angeordnet sind, **dadurch gekennzeichnet, dass** das Innenteil (1, 1') aus einer metallischen Innenhülse (1) und einem in die Innenhülse (1) eingepressten Lagerkern (1') besteht, wobei an die Innenfläche der Innenhülse (1) eine Elastomerkontur (7) anvulkanisiert ist und der Lagerkern (1') gegenüber dem Innendurchmesser der Elastomerkontur (7) mit einem Übermaß ausgebildet ist oder an die Außenfläche des Lagerkerns (1') eine Elastomerkontur (7) anvulkanisiert ist und der Lagerkern (1') mit der anvulkanisierten Elastomerkontur (7) gegenüber dem Innendurchmesser der Innenhülse (1) ein Übermaß aufweist.

2. Buchsenlager nach Anspruch 1, **dadurch gekennzeichnet, dass** dieses ein Kennungsverhältnis von bis 12.000 N/mm : 130 N/mm zwischen dem Bereich des Radialstegs (3, 3') und des Bereichs der Niere (4, 4') aufweist.

3. Buchsenlager nach Anspruch 1 oder 2, **dadurch gekennzeichnet, dass** der Lagerkern (1') des Innenteils (1, 1'), abgesehen von der gegebenenfalls anvulkanisierten Elastomerkontur (7), durch ein Element aus Metall oder Kunststoff, mit einer nach Außen im Wesentlichen zylindrischen Form, gebildet ist.

4. Buchsenlager nach Anspruch 3, **dadurch gekennzeichnet, dass** der Durchmesser des den Lagerkern bildenden zylinderförmigen Elements aus Metall oder Kunststoff im Bereich der Elastomerkontur (7) verringert ist, so dass, unabhängig davon, ob die Elastomerkontur (7) an die Innenfläche der Innenhülse (1) oder die Außenfläche des Lagerkerns (1') anvulkanisiert ist, beiderseits der Elastomerkontur (7) eine axiale Schulter ausgebildet ist.

5. Buchsenlager nach Anspruch 3 oder 4, **dadurch gekennzeichnet, dass** der Lagerkern (1') als ein Hohlzylinder ausgebildet ist.

6. Buchsenlager nach einem der Ansprüche 1 bis 5, **dadurch gekennzeichnet, dass** die Innenhülse (1) des Innenteils (1, 1') eine von der Zylinderform abweichende Außenkontur aufweist.

7. Buchsenlager nach Anspruch 1 oder 6, **dadurch gekennzeichnet, dass** auf den Außenflächen der Innenhülse (1), nämlich im Bereich der Kontaktflächen mit dem elastomeren Lagerkörper (2), Einkerbungen ausgebildet sind.

8. Buchsenlager nach einem der Ansprüche 1 bis 7, **dadurch gekennzeichnet, dass** die Niere oder Nieren (4, 4') durch mit dem Innenteil (1, 1') verbundene Anschlagelemente (8, 8') gebildet sind, deren Außenflächen bezogen auf die Längsachse (x) des Lagers beidseits einer die Längsachse senkrecht schneidenden Ebene (e) einen keilförmigen Verlauf aufweisen, durch den sich der Abstand der Anschlagelemente (8, 8') gegenüber der Innenfläche einer das Lager aufnehmen Außenhülse oder eines Aufnahmeauges (9) in Richtung der axialen Lagerenden vergrößert.

9. Buchsenlager nach einem der Ansprüche 1 bis 8, **dadurch gekennzeichnet, dass** der äußere Bereich (5') der den Radialsteg (3, 3') ausbildenden Schichtenfolge in einen Ring integriert ist, welcher mit dem Radialsteg (3, 3') durch Anvulkanisieren verbunden ist.

10. Buchsenlager nach einem der Ansprüche 1 bis 9, **dadurch gekennzeichnet, dass** zur Reduzierung der Flächenpressung bei dessen Befestigung am Einbauort an mindestens einem der axialen Enden des Lagerkerns (1') eine dessen Außendurchmesser überragende Scheibe (10) angeordnet ist.

11. Buchsenlager nach einem der Ansprüche 1 bis 9, **dadurch gekennzeichnet, dass** an eines der axialen Enden des Lagerkerns (1) ein Flansch angeformt ist.

## Claims

1. Bush bearing, with radial stiffness alternating in the circumferential direction, consisting of an inner part (1, 1') and an elastomer bearing body (2) surrounding the inner part (1, 1') at least in sections, designed to be received by an outer sleeve or a receiving eye (9), with at least one radial web (3, 3') of high radial stiffness and a pocket (4, 4`), which is formed by an elastomer stop elment arranged on the inner part and spaced apart relative to the outer sleeve or the receiving eye (9), wherein in the area of the pocket (4, 4') the radial stiffness is less than in the area of the radial web (3, 3'), wherein in the area of the radial web (3, 3') through formation of a radial layer sequence with the elastomer (6, 6'), elements (5, 5') made of metal or plastic are inserted into the bearing body (2) and are arranged on its radial outer surfaces, **characterised in that** the inner part (1, 1`) consists of a metallic inner sleeve (1) and a bearing core (1') pressed into the inner sleeve (1), wherein an elastomer contour (7) is vulcanised onto the inner surface of the inner sleeve (1) and the bearing core (1') is formed with an excess relative to the inner diameter of the elastomer contour (7) or an elastomer contour (7) is vulcanised onto the outer surface of the bearing core (1') and the bearing core (1') with the vulcanised elastomer contour (7) has an excess relative to the inner diameter of the inner sleeve (1).

2. Bush bearing according to Claim 1, **characterised in that** this has an identification ratio of up to 12,000 N/mm : 130 N/mm between the area of the radial web (3, 3') and the area of the pocket (4, 4').

3. Bush bearing according to Claim 1 or 2, **characterised in that** the bearing core (1') of the inner part (1, 1'), apart from the possibly vulcanised elastomer contour (7), is formed by an element made of metal or plastic, with an outwardly substantially cylindrical form.

4. Bush bearing according to Claim 3, **characterised in that** the diameter of the cylindrical element forming the bearing core made of metal or plastic is reduced in the area of the elastomer contour (7), so that irrespecteive of whether the elastomer contour (7) is vulcanised on the inner surface of the inner sleeve (1) or the outer surface of the bearing core (1'), an axial shoulder is formed on both sides of the elastomer contour (7).

5. Bush bearing according to Claim 3 or 4, **characterised in that** the bearing core (1') is designed as a hollow cylinder.

6. Bush bearing according to any one of Claims 1 to 5, **characterised in that** the inner sleeve (1) of the inner part (1, 1') has an outer contour deviating from the cylindrical shape.

7. Bush bearing according to Claim 1 or 6, **characterised in that** notches are formed on the outer surfaces of the inner sleeve (1), namely in the area of the contact surfaces with the elastomer bearing body (2).

8. Bush bearing according to any one of Claims 1 to 7, **characterised in that** the pocket or pockets (4, 4') are formed by stop elements (8, 8') connected with the inner part (1, 1'), the outer surfaces of which have a wedge-shaped course in relation to the longitudinal axis (x) of the bearing on both sides of the plane (3) perpendicularly intersecting the longitudinal axis, through which the distance of the stop elements (8, 8') relative to the inner surface of an outer sleeve or a receiving eye (9) receiving the bearing increases in the direction of the axial bearing ends.

9. Bush bearing according to any one of Claims 1 to 8, **characterised in that** the outer area (5') of the layer sequence forming the radial web (3, 3') is integrated into a ring, which is connected with the radial web (3, 3') by vulcanisation.

10. Bush bearing according to any one of Claims 1 to 9, **characterised in that** to reduce the surface pressure during its mounting at the installation point a disc (10) extending beyond its outer diameter is arranged on at least one of the axial ends of the bearing core (1').

11. Bush bearing according to any one of Claims 1 to 9, **characterised in that** a flange is formed on one of the axial ends of the bearing core (1').

## Revendications

1. Palier à douille, avec une rigidité radiale variable sur la circonférence, constitué d'une partie interne (1, 1') et d'un corps de palier (2) en élastomère entourant au moins partiellement la partie interne (1, 1'), conçu pour être logé dans un manchon externe ou un oeillet de logement (9), avec au moins une nervure radiale (3, 3') d'une rigidité radiale élevée et un rognon (4, 4') qui est constitué d'un élément de butée (8) en élastomère disposé sur la partie interne, à une certaine distance du manchon externe ou de l'oeillet de logement (9), la rigidité radiale au niveau du rognon (4, 4') étant inférieure à la rigidité au niveau de la nervure radiale (3, 3'), des éléments (5, 5') en métal ou en matière plastique étant insérés dans le corps de palier (2) au niveau de la nervure radiale (3, 3') en formant une série de couches avec l'élastomère (6, 6') et étant disposés sur sa surface radiale externe, **caractérisé en ce que** la partie interne (1, 1') est constituée d'un manchon interne (1) métallique et d'un noyau de palier (1') emmanché de force dans le manchon interne (1), un contour en élastomère (7) étant vulcanisé sur la surface interne du manchon interne (1) et le noyau de palier (1') étant réalisé avec un excès par rapport au diamètre interne du contour en élastomère ou un contour en élastomère (7) étant vulcanisé sur la surface externe du noyau de palier (1') et le noyau de palier (1') avec le contour en élastomère (7) vulcanisé présentant un excès par rapport au diamètre interne du manchon interne (1).

2. Palier à douille selon la revendication 1, **caractérisé en ce que** celui-ci présente un rapport caractéristique de jusqu'à 12 000 N/mm : 130 N/mm entre la zone de la nervure radiale (3, 3') et la zone du rognon (4, 4').

3. Palier à douille selon la revendication 1 ou 2, **caractérisé en ce que** le noyau de palier (1') de la partie interne (1, 1') est constitué, en plus du contour en élastomère (7) éventuellement vulcanisé, d'un élément en métal ou en matière plastique présentant une forme extérieure globalement cylindrique.

4. Palier à douille selon la revendication 3, **caractérisé en ce que** le diamètre de l'élément cylindrique en métal ou en matière plastique constituant le noyau de palier est réduit au niveau du contour en élastomère (7) de façon à ce que, indépendamment du fait que le contour en élastomère (7) est vulcanisé ou non sur la surface interne du manchon interne (1) ou sur la surface externe du noyau de palier (1'), un épaulement axial soit formé des deux côtés du contour en élastomère (7).

5. Palier à douille selon la revendication 3 ou 4, **caractérisé en ce que** le noyau de palier (1') est conçu comme un cylindre creux.

6. Palier à douille selon l'une des revendications 1 à 5, **caractérisé en ce que** le manchon interne (1) de la partie interne (1, 1') présente un contour externe différent de la forme cylindrique.

7. Palier à douille selon la revendication 1 ou 6, **caractérisé en ce que**, sur les surfaces externes du manchon interne (1), c'est à dire au niveau des surfaces de contact avec le corps de palier (2) en élastomère, sont réalisées des encoches.

8. Palier à douille selon l'une des revendications 1 à 7, **caractérisé en ce que** le rognon ou les rognons (4, 4') sont constitués d'éléments de butée (8, 8') reliés avec la partie interne (1, 1'), dont les surfaces externes présentent une extension conique par rapport à l'axe longitudinal (x) du palier des deux côtés d'un plan (e) coupant perpendiculairement l'axe longitudinal, grâce à laquelle la distance des éléments de butée (8, 8') par rapport à la surface interne d'un manchon externe logeant le palier ou d'un oeillet de logement (9) augmente dans la direction des extrémités axiales du palier.

9. Palier à douille selon l'une des revendications 1 à 8, **caractérisé en ce que** la zone externe (5') de la série de couches constituant la nervure radiale (3, 3') est intégrée dans une bague qui est reliée par vulcanisation avec la nervure radiale (3, 3').

10. Palier à douille selon l'une des revendications 1 à 9, **caractérisé en ce que**, pour la réduction de la pression par unité de surface lors de sa fixation sur le lieu d'implantation, un disque (10) est prévu, qui dépasse de son diamètre externe au niveau d'au moins une des extrémités radiales du noyau de palier (1').

11. Palier à douille selon l'une des revendications 1 à 9, **caractérisé en ce que**, au niveau d'une des extrémités radiales du noyau de palier (1'), est formée une bride.
